# EUROPEAN PATENT APPLICATION

(11) **EP 2 779 061 A1**
(43) Date of publication of application: **17.09.2014**
(21) Application number: 14159867.2
(22) Date of filing: 14.03.2014
(51) Int. Cl.: G06Q 20/00, G06F 3/00

(54) **Method and apparatus for setting electronic payment applications in an electronic device**

(30) Priority: 14.03.2013 KR 20130027393
(71) Applicant: Samsung Electronics Co., Ltd., Suwon-si Gyeonggi-do 443-742 (KR)
(72) Inventor: Lee, Choong-Min, 443-742 Gyeonggi-do (KR); Kim, Mi-Jeong, 443-742 Gyeonggi-do (KR); Park, Young-Sik, 443-742 Gyeonggi-do (KR); Lee, Taeck-Ki, 443-742 Gyeonggi-do (KR); Jung, Gi-Ung, 443-742 Gyeonggi-do (KR)
(74) Representative: Nederlandsch Octrooibureau

(57) **Abstract**

An electronic payment system in an electronic device displays a list of electronic payment applications (e.g., electronic wallets) and receives an input for selecting a default electronic payment application from the list. The system sets the selected default electronic payment application as a default electronic payment application among one or more electronic payment applications; and performs electronic payment by activating a payment means (e.g., credit card, gift certificate) of the set default electronic payment application. Also default and temporary payment means for payment applications may be set.

## Description

### BACKGROUND

### 1. Technical Field

The present system is related to an electronic device, and more particularly, to settings of an electronic payment application and a payment method for performing electronic payment in an electronic device.

### 2. Description of the Related Art

known electronic payment systems are used in electronic devices including a mobile terminal. For example, Android-based electronic devices employ electronic payment using an electronic payment application (e.g., an electronic wallet) such as Google Wallet. However, payment means (e.g., credit cards through which payment can be made) are individually managed for respective electronic payment applications such as electronic wallets, and therefore, when a user wants to make payment by using a payment card of another electronic wallet while using a specific electronic wallet, the user needs to execute another electronic wallet application. Further, interfaces (e.g., User Interfaces (UIs)) and User Experience (UX) vary between different types of wallet applications and thus a user is burdened by a need to know how to use multiple different electronic wallet applications and associated interfaces reducing the user friendliness and popularity of electronic payment.

### SUMMARY

Electronic payment in an electronic device is also referred to as Secure Element (SE), and is made through a payment module (e.g., an NFC module) in the form of a separate chip in an electronic device. The electronic payment through the payment module is made based on a standard named Global Platform open payment system that sets a priority order for payment means such as credit cards. However, making electronic payment by using payment means for which a priority order has been set may result in unexpected errors. For example, in a known system where first and second priority payment means are involved and a user is unable make an electronic payment through the first priority payment means due to an error, electronic payment needs to be made through the second priority payment means using the Global Platform but against user preference.

A system for electronic payment in an electronic device includes a payment module that provides electronic payment. A control unit is configured for, initiating display of data representing a list of electronic payment applications, receiving data selecting a default electronic payment application from the list, setting the selected default electronic payment application as a default electronic payment application, activating a payment means of the set default electronic payment application and initiating payment using the payment module and activated payment means.

In a feature, in setting the default electronic payment application, the control unit displays a list of the electronic payment applications when a new electronic payment application is installed or an electronic payment application having been installed is removed. The control unit notifies of the installation or removal of the electronic payment application through a preset display image and sets a default payment means corresponding to one of the electronic payment applications. In initiating payment, the control unit activates the default payment means of the default electronic payment application. In setting the selected default electronic payment application, the control unit sets an electronic payment application associated with the default payment means. The control unit selects a temporary payment means from a plurality of payment means and activates the temporary payment means. The control unit deactivates the activated temporary payment means when the electronic payment using the activated temporary payment means is completed. The control unit restores the activated temporary payment means to original settings before being set as the temporary payment means, when the electronic payment using the activated temporary payment means is completed.

In another feature, a method for electronic payment in an electronic device comprises displaying a list of electronic payment applications and receiving an input for selecting a default electronic payment application from the list; setting the selected default electronic payment application as a default electronic payment application among one or more electronic payment applications. Electronic payment is performed by activating a payment means of the set default electronic payment application.

As described above, according to various embodiments of the present disclosure, a default payment means is set for each of multiple electronic payment applications (e.g., electronic wallets) and the electronic payment application to be mainly used is selected, thereby integrating payment means and providing user friendly payment operation.

### BRIEF DESCRIPTION OF THE DRAWINGS

The above and other aspects, features, and advantages of the system will be more apparent from the following detailed description taken in conjunction with the accompanying drawings, in which:
FIG. 1 shows an electronic device according to invention principles;
FIG. 2A is a first flowchart of an electronic payment method according to invention principles;
FIG. 2B is a second flowchart an electronic payment method according to invention principles;
FIG. 3A illustrates a third example of the electronic payment process of the electronic device according to invention principles;
FIG. 3B illustrates a second example of the electronic payment process of the electronic device according to invention principles; and
FIG. 3C illustrates a first example of the electronic payment process of the electronic device according to invention principles.

### DETAILED DESCRIPTION

Hereinafter, specific exemplary embodiments of the system will be described in detail with reference to the accompanying drawings. However, the description is not restricted or limited by the exemplary embodiments. The same reference numerals represented in each of the drawings indicate the elements that perform substantially the same functions. While terms including ordinal numbers, such as "first" and "second," may be used to describe various components, such components are not limited by the above terms. The terms are used merely for the purpose to distinguish an element from the other elements. For example, a first element could be termed a second element, and similarly, a second element could be also termed a first element without departing from the scope of the present disclosure. The terms used in this application describe particular embodiments and is not intended to be limiting of the disclosure. As used herein, the singular forms are intended to include the plural forms as well, unless the context clearly indicates otherwise.

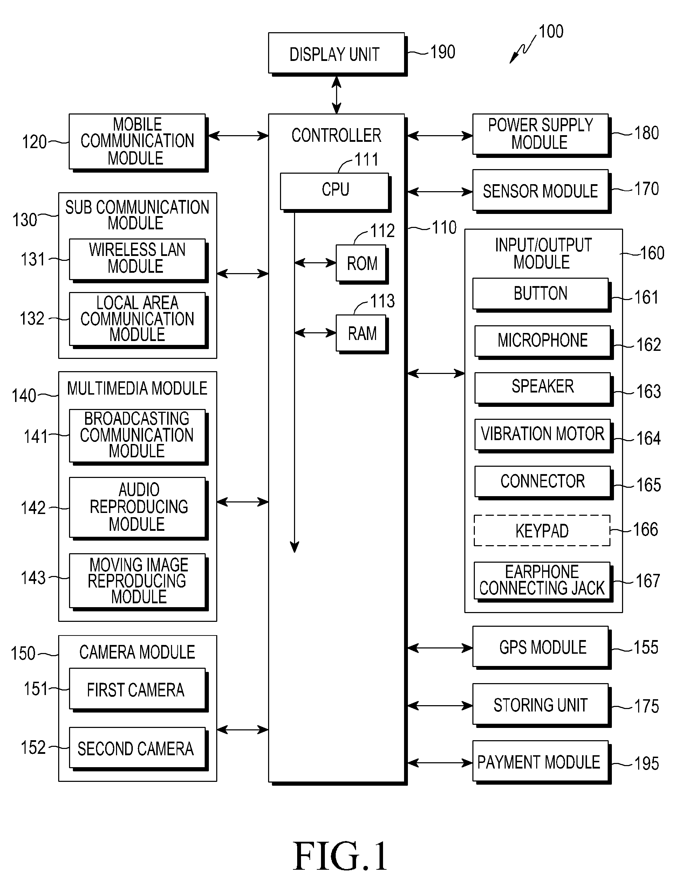

FIG. 1 shows a mobile terminal comprising a portable electronic device such as a phone, and electronic device (e.g., a smart phone, a tablet computer) driven by an operating system such as Bada, Tizen, Windows (e.g., Window 8), iOS, Android, for example. In addition, a mobile terminal may comprise a portable computer (a notebook computer), a digital camera, or a video phone. Mobile terminal 100 may be connected with an external device (not illustrated) by using an external device connector such as a sub communication module 130, a connector 165, and an earphone connecting jack 167. The external device may include various devices attached to or detached from the mobile terminal 100 through a wire, such as earphones, an external speaker, a Universal Serial Bus (USB) memory, a charger, a cradle/dock, a Digital Multimedia Broadcasting (DMB) antenna, a mobile payment related device, a health management device (a blood sugar tester for example), a game machine and a car navigation device, for example. Further, the external device may include a Bluetooth communication device, a short distance communication device such as a Near Field Communication (NFC) device, a WiFi Direct communication device, and a wireless Access Point (AP), which may be wirelessly connected to the mobile terminal 100 through short distance communication. In addition, the external device may include another device, a mobile phone, a smart phone, a tablet PC, a desktop PC, and a server.

The mobile terminal 100 may include a control unit 110, a mobile communication module 120, the sub communication module 130, a multimedia module 140, a camera module 150, a Global Positioning System (GPS) module 155, an input/output module 160, a sensor module 170, a storage unit 175, a power supply unit 180, and a display unit 190. The sub-communication module 130 may include at least one of a wireless LAN module 131 and a local area communication module 132, and the multimedia module 140 may include at least one of a broadcasting communication module 141, an audio reproducing module 142, and a moving image reproducing module 143. The camera module 150 may include at least one of a first camera 151 and a second camera 152, and the input/output module 160 may include at least one of a button 161, a microphone 162, a speaker 163, a vibration motor 164, the connector 165, and a keypad 166.

The mobile communication module 120 allows the mobile terminal 100 to be connected with an external device through mobile communication using one or more antennas (not illustrated) under the control of the control unit 110. The mobile communication module 120 transmits/receives a wireless signal for a voice call, a video call, a Short Message Service (SMS), or a Multimedia Message Service (MMS) to/from a mobile phone (not illustrated), a smart phone (not illustrated), a tablet PC, or another device (not illustrated) having a phone number input into the mobile terminal 100. The sub-communication module 130 may include at least one of the wireless LAN module 131 and the local area communication module 132. For example, the sub-communication module 130 may include the wireless LAN module 131, the local area communication module 132, or both the wireless LAN module 131 and the local area communication module 132.

The wireless LAN module 131 includes a Wi-Fi module and may be connected to the Internet in a place where a wireless Access Point (AP) (not illustrated) is installed through interworking with the control unit 110. The wireless LAN module 131 supports a wireless LAN standard (IEEE802.11x) of the Institute of Electrical and Electronics Engineers (IEEE). The local area communication module 132 provides a function of short distance wireless communication through interworking with the control unit 110. The local area communication module 132 may include a Bluetooth module, an Infrared Data Association (IrDA) module, a Near Field Communication (NFC) module, and the like.

The multimedia module 140 may include the broadcasting communication module 141, the audio reproducing module 142 and the moving image reproducing module 143. The broadcasting communication module 141 may receive a broadcasting signal (e.g., a TV broadcasting signal, a radio broadcasting signal or a data broadcasting signal) which is transmitted from a broadcasting station or broadcasting added information (e.g., EPG (Electric Program Guide) or ESG (Electric Service Guide) through a broadcasting communication antenna (not illustrated) under the control of the control unit 110. The audio reproduction module 142 may reproduce a digital audio file (for example, a file having a file extension of mp3, wma, ogg, or wav) stored or received under the control of the control unit 110. The moving image reproducing module 143 may reproduce a stored or received digital moving image file (e.g., a file of which the file extension is mpeg, mpg, mp4, avi, mov, or mkv) under the control of the control unit 110. The moving image reproducing module 143 may reproduce a digital audio file.

The multimedia module 140 may include the audio reproduction module 142 and the video reproduction module 143 except for the broadcasting communication module 141. Further, the audio reproduction module 142 or the video reproduction module 143 of the multimedia module 140 may be included in the control unit 110. The camera module 150 may include at least one of the first camera 151 and the second camera 152 each of which photographs a still image or a moving image under the control of the control unit 110. Further, the first camera 151 or the second camera 152 may include an auxiliary light source (for example, a flash (not illustrated) providing light required for the photographing. The first camera 151 may be disposed on a front surface of the mobile terminal 100, and the second camera 152 may be disposed on a rear surface of the apparatus 100. In a different way, the first camera 151 and the second camera 152 may be disposed to be adjacent to each other (for example, having an interval between the first camera 151 and the second camera 152 of larger than 1 cm or smaller than 8 cm), and thus a three-dimensional still image or a three-dimensional video may be acquired.

The GPS module 155 may receive radio waves from a plurality of Earth-orbiting GPS satellites (not illustrated), and may calculate the position of the mobile terminal 100 by using the time of arrival of the radio waves to the mobile terminal 100 from the GPS satellites. The input/output module 160 may include at least one of a plurality ofbuttons 161, a microphone 162, a speaker 163, a vibration motor 164, a connector 165, and a keypad 166. The buttons 161 may be formed on the front surface, side surfaces or rear surface of the housing of the mobile terminal 100 and may include at least one of a power /lock button (not illustrated), a volume button (not illustrated), a menu button, a home button, a back button, and a search button 161. The microphone 162 receives a voice or a sound to generate an electrical signal under the control of the control unit 110. The speaker 163 may output sounds corresponding to various signals (for example, a wireless signal, a broadcasting signal, a digital audio file, a digital video file, taking a picture for example) of the mobile communication module 120, the sub communication module 130, the multimedia module 140, or the camera module 150 under the control of the control unit 110. The speaker 163 may output a sound which corresponds to the functions performed by the mobile terminal 100 (for example, a button operation sound corresponding to a phone call or a call connection sound). One or more speakers 163 may be formed at a proper position or positions of the housing of the mobile terminal 100.

The vibration motor 164 may convert an electronic signal to mechanical vibration under the control of the control unit 110. For example, when the mobile terminal 100 in a vibration mode receives a voice call from another device (not illustrated), the vibration motor 164 is operated. One or more vibration motors 164 may be provided in the housing of the mobile terminal 100. The vibration motor 164 may be operated in response to user touch action that touches the touch screen 190 and a continuous touch movement on the touch screen 190. The connector 165 may be used as an interface for connecting the mobile terminal 100 with an external device (not illustrated) or a power source (not illustrated). The mobile terminal 100 may transmit data stored in the storage unit 175 of the mobile terminal 100 to an external device (not illustrated) or may receive data from the external device (not illustrated) through a wired cable connected to the connector 165 under the control of the control unit 110. Further, the mobile terminal 100 may receive power from a power source (not illustrated) through the wired cable connected to the connector 165 or charge a battery (not illustrated) by using the power source.

The keypad 166 may receive a key input from the user so as to control the mobile terminal 100. The keypad 166 may include a physical keypad (not illustrated) formed in the mobile terminal 100 or a virtual keypad (not illustrated) displayed on the touch screen 190. The physical keypad (not illustrated) formed in the mobile terminal 100 may be omitted. An earphone (not illustrated) may be inserted into the earphone connecting jack 167 to be connected with the mobile terminal 100. The sensor module 170 may include at least one sensor that detects the status of the mobile terminal 100. For example, the sensor module 170 may include a hall sensor that detects a change in a magnetic field according to access of an object, a proximity sensor that detects a user's proximity to the mobile terminal 100, an illumination sensor (not illustrated) that detects a brightness around the mobile terminal 100, a motion sensor (not illustrated) that detects a motion of the mobile terminal 100 (e.g., rotation of the mobile terminal 100, and acceleration or vibration applied to the mobile terminal 100), a geo-magnetic sensor (not illustrated) that detects a point of a compass by using Earth's magnetic field, a gravity sensor which detects an action direction of the gravity, an altimeter that detects an altitude by measuring atmospheric pressure. At least one sensor may detect the state, generate a signal corresponding to the detection, and transmit the generated signal to the control unit 110. The sensors of the sensor module 170 may be added or omitted according to the capability of the mobile terminal 100.

The storage unit 175 may store signals or data input/output in response to the operations of the mobile communication module 120, the sub-communication module 130, the multimedia module 140, the camera module 150, the GPS module 155, the input/output module 160, the sensor module 170, and the touch screen 190 under the control of the control unit 110. The storage unit 175 may store a control program and applications for controlling the mobile terminal 100 or the control unit 110. The storage unit 175 may comprise a Read Only Memory (ROM) 112 or a Random Access Memory (RAM) 113. Further, the storage unit 175 may also further include an external memory such as a Compact Flash (CF), a Secure Digital (SD), a Micro Secure Digital (Micro-SD), a Mini Secure Digital (Mini-SD), an Extreme Digital (xD), Memory Stick, for example. In addition, the storage unit 175 may further include a disk storage device such as a Hard Disk Drive (HDD), a Solid State Disk (SSD), and the like.

Meanwhile, one or more electronic payment applications including an electronic wallet is installed in the storage unit 175. A user may set one or more payment means (e.g., a payment card such as a credit card) for each of the electronic payment applications (e.g., a user may input a type of a card, a card number, a Personal Identification Number (PIN) of a card, and the like), and may use a function of the electronic payment by using the electronic payment applications for which the payment means has been set.

The power supply unit 180 may supply power to one or more batteries (not illustrated) arranged in the housing of the mobile terminal 100 under the control of the control unit 110. The one or more batteries (not illustrated) supply power to the mobile terminal 100. Further, the power supply unit 180 may supply power input from an external power source (not illustrated) through a wired cable connected to the connector 165 to the mobile terminal 100. In addition, the power supply unit 180 may supply power wirelessly input from the external power source through a wireless charging unit to the mobile terminal 100.

The display unit 190 may be configured with a Liquid Crystal Display (LCD), an Organic Light Emitting Diode (OLED) (e.g., a Passive-Matrix OLED (PMOLED) or an Active-Matrix OLED (AMOLED)), for example and outputs different kinds of display information. The display unit 190 may include a touch screen (e.g., a Touch Screen Panel: TSP) implemented as a resistive type, a capacitive type, an infrared type, or an acoustic wave type, and a touch screen controller. Further, the display unit 190 may also include a controller corresponding to a digitizer capable of receiving an input of a user's pen (e.g., an electromagnetic induction type touch input tool such as an S pen of Samsung Electronics Co., Ltd.) through an electromagnetic induction method in addition to the touch screen.

The display unit 190 may provide a user interface corresponding to different services (e.g., phone communication, data transmission, broadcasting, and photographing a picture) to the user. The touch screen of the display unit 190 may transmit an analog signal corresponding to at least one touch input to the user interface to the touch screen controller (not illustrated). The display unit 190 may receive at least one touch by a user (e.g., fingers including a thumb) or a touchable input means (e.g., a stylus pen) through the touch screen. A touch is not limited to the contact between the display unit (e.g., the touch screen) and the user's body or the touchable input means, and may include a non-contact (e.g., a case where a detectable interval between the touch screen and the user's body or the touchable input means is smaller than or equal to 1 mm).

The touch screen controller may convert an analog signal received from the touch screen of the display unit 190 to a digital signal (for example, X and Y coordinates) and transmit the converted digital signal to the control unit 110. The control unit 110 may control the touch screen of the display unit 190 by using the digital signal received from the touch screen controller. For example, the control unit 110 may control an application icon displayed on the display unit 190 to be selected or a corresponding application to be executed in response to the touch. At this time, the touch screen controller may be included in the control unit 110.

A payment module 195 provides a payment function using non-contact communication (e.g., short distance wireless communication). The payment module 195 is also referred to as a Secure Element (SE), and the SE is included in the form of a separate chip in the mobile terminal. The payment module 195 operates in the form of an operating system including a Contactless Registry Service (CRS) applet that controls an overall operation of the payment module, a Proximity Payment System Environment (PPSE), and a registry and provides a function of electronic payment of the mobile terminal through a specification prescribed in the Global Platform. A Near Field Communication (NFC) module and a Radio Frequency Identification (RFID) module may be employed by payment module 195.

The payment module 195 is compatible with the specification prescribed in the Global Platform to provide the electronic payment function. In addition, the payment module 195 provides an electronic payment function through commands (including Set Default Card, Remove Default Card, Set Temporary Payment Card, Cancel Temporary Payment Card, Get Wallet List, Set Selection Mode, and Set Default Wallet) added to the specification of the Global Platform. The CRS for controlling the overall operation of the payment module 195 may also be referred to as Samsung CRS. The control unit 110 may include a CPU 111, ROM 112 storing a control program for controlling the mobile terminal 100, and RAM 113 used as a storage area for storing signal data or data input from the outside of the mobile terminal 100 or for an operation performed in the mobile terminal 100. The CPU 111 may operate in a type of a multi core such as a single core, a dual core, a triple core, or a quadruple core. The CPU 111, the ROM 112 and the RAM 113 may be connected with each other through internal buses. The control unit 110 may control the mobile communication module 120, the sub communication module 130, the multimedia module 140, the camera module 150, the GPS module 155, the input/output module 160, the sensor module 170, the storage unit 175, the power supply unit 180, and the display unit 190. The control unit 110 controls a series of operations such as selecting a default electronic payment application from multiple electronic payment applications and performs electronic payment by activating a payment means of the selected default electronic payment application.

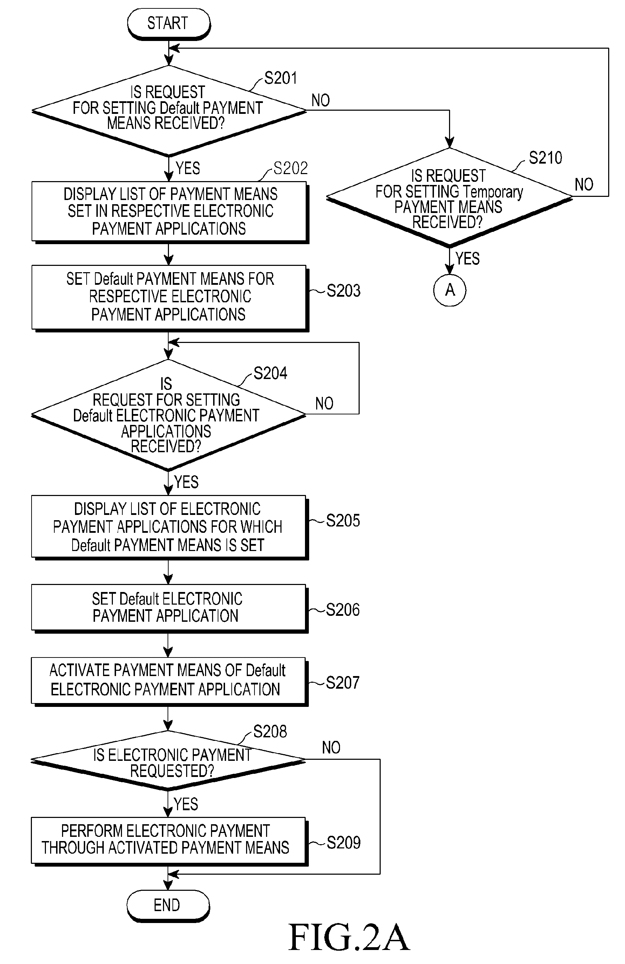

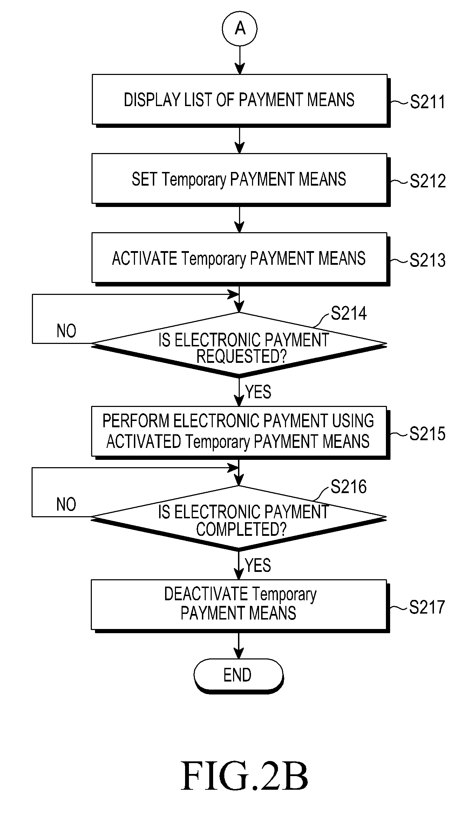

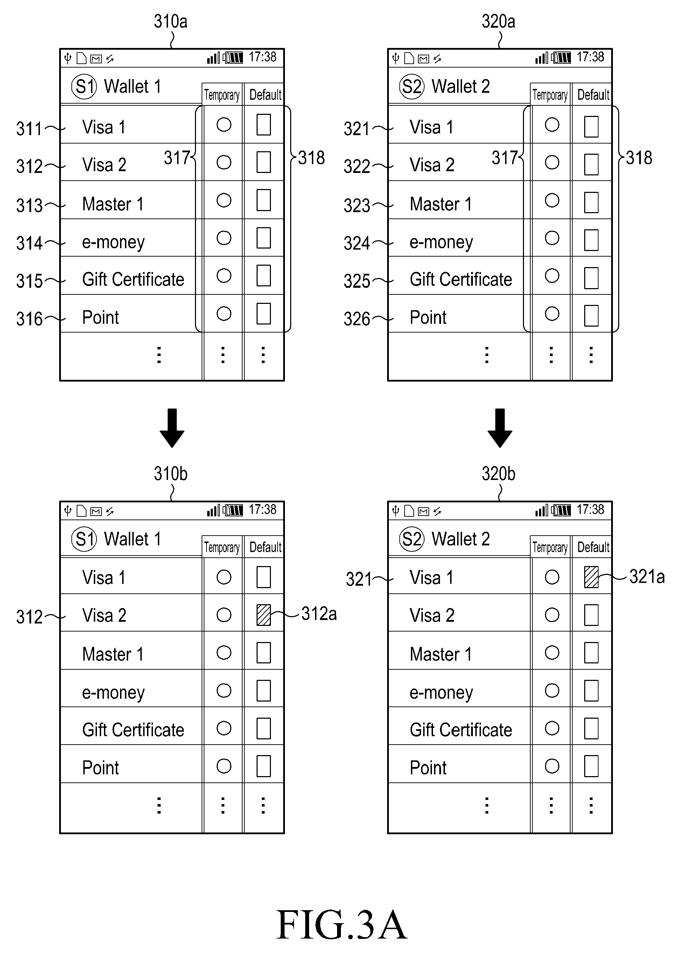

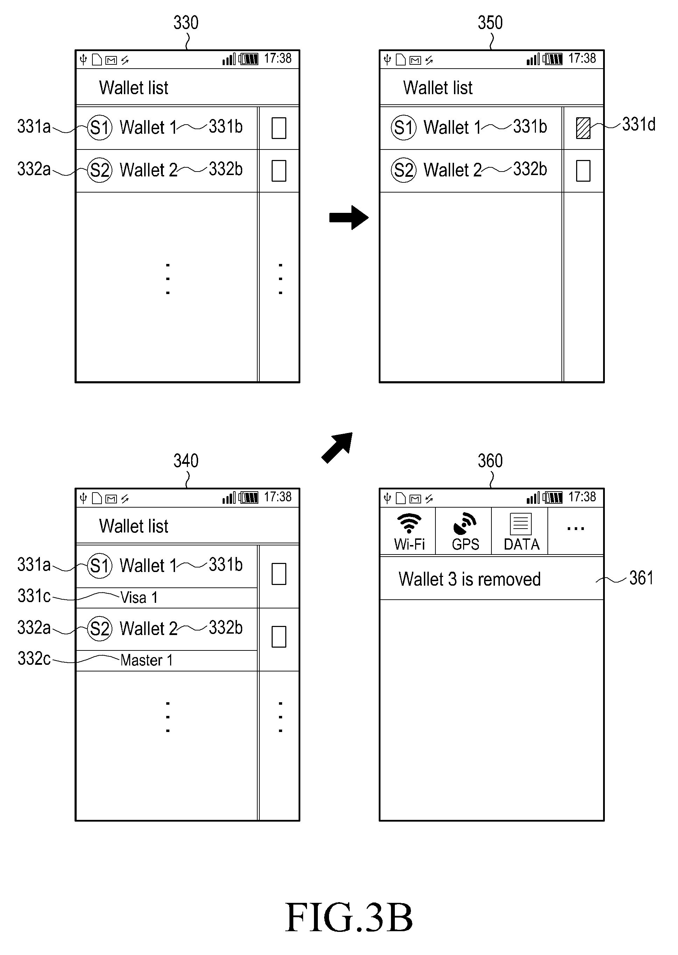

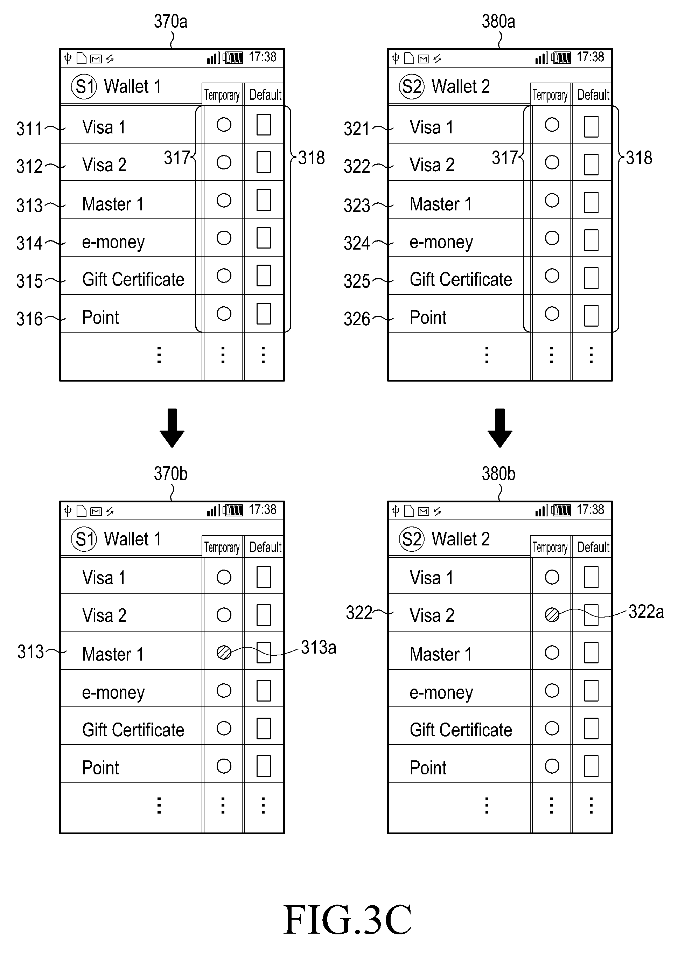

FIG. 2A, 2B, 3A, 3B and 3C show flowcharts of electronic payment processes of an electronic device. Referring to FIG. 2A, in operations S201 to S203, when receiving a request for selecting default payment means for respective electronic payment applications, the control unit 110 displays a list of payment means selected in the respective electronic payment applications and receives a selection of the default payment means for the electronic payment applications. Referring to FIG. 3A, electronic payment applications of first and second electronic wallets are installed in a mobile terminal and the control unit 110 displays a list of payment means 311 to 316 configured for the first electronic wallet (Wallet 1) installed in the mobile terminal as illustrated on a display screen 310a. The control unit 110 may display an interface 317 through which any one of the displayed payment means may be set as a temporary payment means and/or an interface 318 through which any one of the displayed payment means may be set as the default payment means together with the list of the payment means.

The control unit 110 receives data identifying default payment means to be used as a main payment card in the first electronic wallet through a user's input (e.g., an input or a selection via the interface 318). The list of the payment means set in the electronic payment application may be obtained from a database of the electronic payment application. that stores information on the set payment means.

For example, a user may select one of the payment means 311 to 316 (e.g., via a touch input or a number input) to set the default payment means through the display screen 310a illustrated in FIG. 3A. Payment means may include a credit card (or a check card), e-money, a gift certificate, a point (e.g., a membership point), a gift card (e.g., a Google gift card), for example. A user is notified through a visual indication 312a on a display screen 310b that credit card 312 (Visa 2) has been selected as the default payment means.

Similarly, the control unit 110 displays a list of payment means 321 to 326 set in the second electronic wallet (Wallet 2) installed in the mobile terminal as illustrated on a display screen 320a. Thereafter, the control unit 110 receives a setting of a default payment means of the second electronic wallet through a user's input via the interface 318. For example, the user may select one of the payment means 321 to 326 (e.g., perform an input or a selection for the interface 318) to set the default payment means through the display screen 320a. The user is notified through a visual indication 321a on a display screen 320b that among the payment means 321 to 326, the payment means 321 has been selected as the default payment means. Payment module 195 provides the payment function of the mobile terminal based on a specification determined by the Global Platform standard for an open payment system using commands including Set Default Card, Remove Default Card, Set Temporary Payment Card, Cancel Temporary Payment Card, Get Wallet List, Set Selection Mode, and Set Default Wallet, and by using the Global Platform employing the commands.

The control unit 110 transfers the command of Set Default Card and a variable corresponding to identification information (e.g., Card AID; Card Application ID) of the payment means selected as default for payment module 195, and the payment module 195 updates a configuration table of the default payment means based on the command and the identification information. In response to receiving a request for cancelling the selected set of default payment means, the control unit 110 may transfer the command of Remove Default Card and identification information of the default payment means to be cancelled to the payment module 195.

For example, when the control unit 110 transmits the command of Set Default Card, identification information (e.g., Card AID) corresponding to the payment means 312 of FIG. 3A, and identification information (e.g., Card AID) corresponding to the payment means 321 of FIG. 3A to the payment module 195, the payment module (e.g., CRS of the payment module) updates the setting table of the default payment means of the electronic payment applications as illustrated in Table 1 below. Here, the Card AID is used for identifying corresponding payment means (e.g., a payment card such as a credit card) and an electronic payment application registered and associated with the payment means.

**Table 1**

| Electronic Payment Means | Default Payment Means |
|---|---|
| Wallet 1 | Visa 2 |
| Wallet 2 | Master 1 |

In operations S204 to S207, in response to receiving a request for selecting a default electronic payment application, the control unit 110 displays a list of the electronic payment applications for which the default payment means has been set. The control unit 110 receives data indicating selection of the default electronic payment application and controls such that the payment means of the electronic payment application set as the default is activated.

At this time, the control unit 110 according to the various embodiments of the present disclosure may control such that the payment means which is not set (or selected) as a default payment means in the respective electronic payment applications is deactivated.

When the default payment means of the respective electronic payment applications is set as described in connection with operations S201 to S203, the control unit 110 displays an image through which the user performs a selection of a default electronic payment applications. When the user makes a request for setting the default electronic payment application, the control unit 110 determines that displaying a list of the electronic payment applications has been requested, obtains the list of the electronic payment applications from the payment module 195, and displays the list of the electronic payment applications. Further, a list of the electronic payment applications is displayed. For example, when a new electronic payment application is installed or the previously installed electronic payment application (e.g., the default electronic payment application) is removed, the control unit 110 may display an image element (e.g., a notification bar) notifying removal or installation as illustrated on a display screen 360 of FIG. 3B, and may display the list of the electronic payment applications in response to user input (e.g., a touch input) as illustrated on a display screen 330 or 340.

For example, when an electronic payment application is removed or installed, the control unit 110 may display a list of electronic payment applications and support selecting a default electronic payment application. When the electronic payment application is removed or installed, the control unit 110 may also support updating and displaying the list of the electronic payment applications. Referring to FIG. 3B, as illustrated on the display screen 330, the control unit 110 may display the list of the electronic payment applications of Wallet 1 and Wallet 2 for which the default payment means has been set, and may receive a selection of an electronic payment application to be set as a default from a user. For example, the control unit 110 may obtain the list of the electronic payment applications, for which the default payments means has been set, from the payment module 195 through a command of Get Wallet List, and display the obtained list.

At this time, the control unit 110 according to the various embodiments of the present disclosure displays the list of the electronic payment applications through icon images 331a and 332a corresponding to the respective electronic payment applications and names 331b and 332b of the respective electronic payment applications. Through the displaying of the list, a user may easily identify the respective electronic payment applications from the displayed list of the electronic payment applications. Here, the icon images and the names corresponding to the respective electronic payment applications may be obtained through an application manager of the mobile terminal. For example, a Package Name of the electronic payment applications may be obtained through a Package Manager of an Android system.

Control unit 110 displays the list of the electronic payment applications (e.g., Wallet 1 and Wallet 2) together with the default payment means set for the electronic payment applications facilitating selection of a default electronic payment application. For example, as illustrated on the display screen 340 of FIG. 3B, the control unit 110 displays default payment means 331c and 332c for associated electronic payment applications Wallet 1 and Wallet 2 together with the list. Unit 110 may set one of the electronic payment applications as a default electronic payment application in response to user input (or selection) and display the result. For example, element 331d on display screen 350 shows Wallet 1 as a default electronic payment application. In response to a default electronic payment application being selected by the user, the control unit 110 transmits a command of Set Default Wallet and identification information capable of identifying the electronic payment application (e.g., a Package Name of the electronic payment application) to the payment module 195. The payment module 195 (e.g., a CRS applet) allows PPSE of the payment module to record File Control Information (FCI) data of the default payment means activating the default payment means of the default electronic payment application and deactivating the remaining payment means. The FCI data is provided to a Point Of Sales (POS) terminal by the payment module 195, and the FCI data is transferred to the POS terminal indicating progress of the electronic payment. The FCI data of the activated payment means is recorded (e.g., activated) and the FCI data of the deactivated payment means is not recorded (e.g., deactivated). The default payment means and the default electronic payment application may be set in a different order. For example, a default electronic payment application may first be set from a plurality of the electronic payment applications, and then default electronic payment means for respective electronic payment applications may be set.

In operations S208 and S209 (FIG. 2A), when electronic payment is requested, the control unit 110 initiates electronic payment through the activated payment means. The electronic payment can be performed through the default payment means (e.g., the activated payment means) Through the above-described configuration, the electronic payment can be performed through the default payment means (e.g., the activated payment means) of the electronic payment application set as the default. Namely, the electronic payment using the activated payment means can be performed, and the electronic payment using the deactivated payment means cannot be performed. For example, the payment module (e.g., PPSE of the payment module) transmits the FCI data of the activated payment means (e.g., the default payment means of the electronic payment application set as the default) to the POS terminal, supporting the electronic payment.

As described above, the electronic payment is performed though the payment means (e.g., the activated default payment means) of which the FCI data has been transmitted to the POS terminal, thereby making it possible to solve the problems of the electronic payment using the Global Platform according to the related art in which the electronic payment is performed through a payment card that a user tries not to use for payment.

Meanwhile, in the various embodiments of the present disclosure, the default electronic payment application may also be automatically selected. For example, when a certain mode (e.g., Last Wallet Mode) is activated, an electronic payment application for which the default payment means has been finally set may also be automatically set as the default electronic payment application.

Further, in the various embodiments of the present disclosure, when the default electronic payment application has been set from the electronic payment applications (or the default electronic payment application has been changed), different forms of information for notifying that the default electronic payment application has been set may be provided to a user. For example, at least one of a name (e.g., Package Name) of the set default electronic payment application and an image (e.g., an icon) corresponding to the set default electronic payment application may be displayed through an indicator bar or a user interface (UI) in a pop-up window. Further, when the default electronic payment application has been cancelled, cancellation information may be displayed. In operation S210, when receiving a request for selecting a temporary payment means, the control unit 110 proceeds to operation A of FIG. 2B.

Referring to FIG. 2B, in operations S211 to S213, the control unit 110 receives data identifying the selected temporary payment means, displays a list of payment means and activates the set temporary payment means. Unit 110 also supports one time selecting of the temporary payment means and performing payment through the set temporary payment means. Control unit 110 may display an image through which the setting of the temporary payment means may be selected. Thereafter, when receiving the request for the setting of the temporary payment means, the control unit 110 displays a list of the payment means set in the respective electronic payment applications similar to the manner described in connection with FIG. 3A. Further, when an electronic payment application is removed or installed, the control unit 110 may also display a list of the electronic payment applications and support selection of a temporary electronic payment application.

The control unit 110 may display image elements 317 (FIG. 3A) through which one payment means can be set as a temporary payment means and/or an image elements 318 through which one payment means can be set as the default payment means, together with a list of the payment means while concurrently displaying a list of the electronic payment applications. Control unit 110 receives a setting of the temporary payment means, which is used one time for electronic payment in a first or a second electronic wallet, through user input (e.g., an input or a selection via elements 317). For example, a user may select the temporary payment from payment means 311 to 316 via elements 317 (e.g., via a touch or a number input) on a display screen 370a illustrated in FIG. 3C. A user is notified via element 313a on a display screen 370b that the payment means 313 has been selected as the temporary payment means. In response to selection of temporary payment means in the second electronic wallet, the control unit 110 displays a list of the payment means 321 to 326 set in the second electronic wallet (Wallet 2) as illustrated on a display screen 380a. Control unit 110 receives a setting of the temporary payment means through user input via elements 317. A user is notified through image element 322a on a display screen 380b that payment means 322 has been selected as the temporary payment means. The list of the payment means set according to the respective electronic payment applications (e.g., the first electronic wallet and the second electronic wallet) is displayed, and the temporary payment means is set from the displayed list. Payment means set in the electronic payment applications are displayed, and the temporary payment means may also be set from them.

In response to a request to select temporary payment means from the displayed payment means, the control unit 110 transmits a command of Set Temporary Payment Card and identification information (e.g., Card AID; Card Application ID) of the payment means set (selected) as the temporary payment means to the payment module 195 (e.g., CRS of the payment module). In response, the payment module 195 (e.g., PPSE of the payment module) records FCI data of the payment means set as the temporary payment means, and activates the selected temporary payment means. Control unit 110 may deactivate the remaining payment means so they do not record FCI data. In operations S214 to S217, the control unit 110 performs electronic payment using the activated temporary payment means when receiving a request for electronic payment, and deactivates the activated temporary payment means when the electronic payment is completed.

When the electronic payment is requested, the control unit 110 and the payment module 195 perform a series of operations related to the electronic payment using the temporary payment means. For example, the payment module 195 may transmit the FCI data of the activated temporary payment means (e.g., the payment means set as the temporary payment means) to a POS terminal and complete the electronic payment through an authentication process. When the electronic payment using the activated temporary payment means is completed, the control unit 110 provides a command such as Cancel Temporary Payment Card and the identification information of the activated temporary payment means to the payment module 195 (e.g., CRS of the payment module). Payment module 195 (e.g., PPSE of the payment module) removes the FCI data of the activated temporary payment means to deactivate the activated temporary payment means. Temporary payment means may be restored to its original state (or settings) before being set as the temporary payment means. For example, in a case in which the payment means 312 set as the default payment means on the display screen 310b of FIG. 3A is set as a temporary payment means, the payment means 312 may be restored (e.g., reset) to the default payment means from the temporary payment means when electronic payment using the temporary payment means is completed.

The methods herein may be implemented in the form of program commands executed through different computer means recorded in a computer readable medium. The computer-readable medium may include a program command, a data file, and a data structure individually or a combination thereof. Although different embodiments have been described, the embodiments are to be considered illustrative, and not restrictive, and it will be understood that modifications can be made to an extent of equivalently substituting for these embodiments without departing from the spirit and scope of the described principals.

The above-described embodiments can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. The functions and process operations herein may be performed automatically or wholly or partially in response to user command. An activity (including a operation) performed automatically is performed in response to executable instruction or device operation without user direct initiation of the activity. No claim element herein is to be construed under the provisions of 35 U.S.C. 112, sixth paragraph, unless the element is expressly recited using the phrase "means for."

## Claims

1. A method for electronic payment in an electronic device, the method comprising:
displaying a list of electronic payment applications;
receiving an input for selecting a default electronic payment application from the list;
setting the selected default electronic payment application as a default electronic payment application among one or more electronic payment applications; and
performing electronic payment by activating a payment means of the set default electronic payment application.

2. The method of claim 1, wherein the setting of the default electronic payment application comprises:
displaying a list of the electronic payment applications when a new electronic payment application is installed or an electronic payment application having been installed is removed; and
setting an electronic payment application selected from the displayed list as a default electronic payment application.

3. The method of claim 2, **characterized in that** the displaying of the list of the electronic payment applications comprises:
notifying of the installation or removal of the electronic payment application through a predetermined display image and displaying the list of the electronic payment applications via the predetermined display image.

4. The method of claim 1, **characterized by**:
setting a default payment means associated with at least one of the electronic payment applications.

5. The method of claim 4, **characterized in that** the performing of the electronic payment comprises:
performing the electronic payment by activating the default payment means of the default electronic payment application.

6. The method of claim 4, **characterized in that** the setting of the default electronic payment application comprises:
setting an electronic payment application associated with the default payment means, as the default electronic payment application.

7. The method of claim 1, **characterized by**:
selecting a temporary payment from the electronic payment means.

8. An apparatus for electronic payment in an electronic device, the apparatus comprising:
a payment module that provides electronic payment;
a display unit that displays a list of electronic payment applications;
a wireless communication unit that receives an input for selecting a default electronic payment application from the list; and
a control unit that sets the selected default electronic payment application as a default electronic payment application among one or more electronic payment applications, and performs electronic payment by activating a payment means of the set default electronic payment application.

9. The apparatus of claim 8, **characterized in that**, in setting the default electronic payment application, the control unit displays a list of the electronic payment applications when a new electronic payment application is installed or an electronic payment application having been installed is removed, and sets an electronic payment application selected from the displayed list as a default electronic payment application.

10. The apparatus of claim 9, **characterized in that**, the control unit notifies of the installation or removal of the electronic payment application through a preset display image.

11. The apparatus of claim 8, **characterized in that** the control unit sets a default payment means corresponding to one of the electronic payment applications.

12. The apparatus of claim 11, **characterized in that**, in initiating payment, the control unit activates the default payment means of the default electronic payment application.

13. The apparatus of claim 11, **characterized in that**, in setting the selected default electronic payment application, the control unit sets an electronic payment application associated with the default payment means.

14. The apparatus of claim 10, **characterized in that** the control unit selects a temporary payment means from a plurality of payment means.

15. Computer program product comprising computer instructions which, when executed on a controller of a portable terminal, cause the terminal to behave according to any one of the method claims 1-7 or as the apparatus according to any one the claims 8-14.
